# EUROPEAN PATENT APPLICATION

(11) **EP 4 369 700 A1**
(43) Date of publication of application: **15.05.2024**
(21) Application number: 22206250.7
(22) Date of filing: 08.11.2022
(51) Int. Cl.: H04N 5/222, G06T 7/70, G06T 15/20, G06T 19/00, H04N 5/262, H04N 5/272, H04N 9/75, H04N 23/23, H04N 23/45, H04N 23/57, H04N 23/63, H04N 23/90

(54) **METHOD AND SYSTEM FOR TRACKING CAMERA POSES**

(71) Applicant: Hexagon Geosystems Services AG, 9435 Heerbrugg (CH)
(72) Inventor: HARTI, Ralph, 8409 Winterthur (CH); WIESER, Matthias, 73240 Wendlingen (DE); HEINZLE, Lukas, 8820 Wädenswil (CH); STEFFEN, Roman, 9445 Rebstein (CH); BÖCKEM, Burkhard, 8916 Jonen AG (CH); MURGUET, Axel, 8055 Zürich (CH); Bruneau, Garance, 8055 Zürich (CH); STRUPLER, Pascal, 5408 Ennetbaden (CH)
(74) Representative: Kaminski Harmann

(57) **Abstract**

The invention pertains to a pose tracking system for continuously determining a pose of a digital video camera (5) while filming a scene at a set of a film or TV production, wherein the system comprises a pose tracking device (1) that comprises one or more 2D cameras (21) configured to provide 2D image data of an environment and at least one time-of-flight camera (23) comprising a sensor array and one or more laser emitters (24), wherein the pose tracking device is attached to or configured to be attached to the digital video camera so that the ToF camera is oriented to capture 3D point-cloud data of the scene filmed by the digital video camera, wherein the pose tracking device comprises a localization unit that is configured to execute a pose determination functionality that comprises continuously capturing 2D image data of the environment by the 2D cameras, continuously determining a pose of the digital video camera based at least on the 2D image data, and generating pose data based on the determined pose, and a data interface for providing a data connection with a VFX engine, wherein the pose tracking device is configured to provide the three-dimensional point-cloud data of the set and the pose data to the VFX engine.

## Description

The present invention relates to a method and a system for tracking a pose of a video camera, particularly of a professional digital video camera, such as a television (TV) camera or film camera (also known as movie camera or cine-camera). The system comprises a device that may be configured as an adapter that is attached on top of the camera. In particular, the camera pose may be tracked during the filming of a scene involving visual effects (VFX), augmented reality (AR) and/or artificial backgrounds - for instance at sets at which chroma keying screens (e.g. green screens or blue screens), video screens (e.g. high-definition LED video walls) or on-set virtual production (OSVP) are used. Advantageously, the method and system do not need any additional markers or sensors to be distributed at the set in order to track the pose of the camera. Additionally, depth images of a take can be generated to allow adding visual effects or virtual objects at the correct position relative to (i.e. behind or in front of) real objects and actors at the scene.

Chroma keying screens have been used for a long time to remove and replace a background from a video, e.g. in newscasting and motion pictures. A colour range in the foreground footage is made transparent, allowing a separately filmed or computer-generated background footage or static image (virtual background) to be inserted into the scene. If the camera is moving during a take, in order to insert realistic looking virtual backgrounds into video the graphics system needs to know precisely how the camera is moving. Then, objects and effects of the virtual background can be rendered in the correct place in every video frame.

More recently, so-called on-set virtual production (OSVP; also known as virtual production or virtual studio) has been introduced for TV and film productions. This technology uses large video screens (e.g. LED panels) as a backdrop for a set, on which video or computer generated imagery can be displayed in real-time. An OSVP set can be made to closely approximate the appearance of a real set or outdoor location. To render parallax depth cues correctly from the viewpoint of a moving camera, the system requires the use of match moving of the background imagery based on data from low-latency real-time motion capture technology to track the camera. Match moving is used to track the movement of a camera through a shot of a scene so that an identical virtual camera move can be reproduced in a 3D animation program. When new animated elements are composited back into the original live-action shot, they may appear in perfectly matched perspective and therefore seamless.

The first step of match moving is the camera tracking. It is known to track a pose and trajectory of a camera while the camera is used for filming a scene in which LED panels are used to create an artificial background. Thereby, the background projected on the video wall may be adapted in real time based on the current camera pose to create a more realistic 3D effect. This is usually done by providing a multitude of sensors in the set that track the camera and continuously determine its pose. These sensors, for instance, may include cameras and laser trackers. Alternatively, a multitude of markers can be provided, positions of which being captured by sensors provided on the video camera or derived from images captured by the camera. The pose includes the position and orientation of the camera, particularly in six degrees-of-freedom (6DoF).

It would be desirable to provide a simpler solution to track the camera pose, particularly without the need to provide a multitude of sensors or markers in each scene, and without the need to have them maintain their position and orientation with high precision throughout the filming at the set.

Moreover, it would be desirable to not only track the pose of the camera but also to determine 3D positions and paths of objects and actors during a take. Such information would facilitate adding 3D VFX or AR to the scene, i.e. in positions around the real objects and actors, in a realistic looking manner, for instance during post-production. This information would also be helpful if available in real time, e.g. to easily determine if the positions and paths of objects and actors in a scene allow adding the planned 3D VFX or AR, or if a retake of the scene is required.

The use of 3D VFX or AR may also comprise merging footage from several takes into a single scene. For instance, this may include adding (real) actors as a virtual effect to a scene, so that actors from different takes need to plausibly interact with each other. In these cases, correct 3D positions and paths are necessary in order to avoid retakes or unrealistic interactions.

It is known that time-of-flight (ToF) cameras can be used - especially for indoor applications with short-range measurements - to produce meshes that may be used for similar applications like point-clouds generated by laser scanners. A main advantage of ToF-sensor-chip based systems is the capability of acquiring multiple 3D points simultaneously in a very short time, compared to traditional scanning systems. This means that these systems have a relatively high data acquisition rate even with a low resolution (compared to traditional image sensors which have a very high resolution). Additionally, the acquired 3D points in space are homogeneously arranged e.g. in a rectangular form, as opposed to traditional scanning systems, which deliver "scan-traces" which are not as suitable for post-processing or deploying SLAM (simultaneous localization and mapping) algorithms.

The European patent application EP21176387.5 discloses a compact reality capture device for generating a digital three-dimensional representation of an environment, the device comprising an arrangement of time-of-flight (ToF) cameras configured for capturing three-dimensional (3D) point-cloud data of the environment and a number of RGB cameras configured to provide two-dimensional (2D) image data of the environment. Using both its 3D and 2D cameras, the device may be configured to continuously determine its pose, i.e. track its current position and orientation in the environment.

It is therefore an object of the present invention to provide an improved pose tracking system and method.

It is a further object to provide an improved pose tracking system and method for tracking the pose of a digital camera filming a film set, particularly a set comprising chroma-keying or on-set virtual production.

It is a particular object to provide such a pose tracking system and method that require a less complex setup, particularly no sensors or markers to be distributed in the film set.

It is a further object to provide such a pose tracking system and method to facilitate adding virtual effects or augmented reality in correct spatial relationships to objects and actors at the film set, particularly a system and method that allow capturing 3D data, such as depth images, of the set.

It is a particular object to provide such a pose tracking system and method that allow capturing the pose and the 3D data simultaneously.

It is another object to provide an improved pose tracking device as part of the system, wherein the device is small, light-weight and has no moving parts, so that it is easier to build, needs less maintenance and is generally more durable.

It is another object to provide such a pose tracking device that can easily be attached to a professional digital camera without disturbing camera work.

At least one of these objects is achieved by the characterizing features of the independent claims. Features which further develop the invention in an alternative or advantageous manner can be found in the dependent claims.

A first aspect of the present invention relates to a pose tracking system for continuously determining a pose of a video camera (particularly a digital video camera) while filming a scene at a set of a film or TV production. The system comprises an imaging unit with one or more 2D cameras configured to provide 2D image data of an environment. According to this aspect of the invention, the system comprises a pose tracking device that comprises the imaging unit and at least one time-of-flight (ToF) camera comprising a sensor array and one or more laser emitters, the ToF camera being configured for capturing 3D point-cloud data of the set. The pose tracking device is attached to (or configured to be attached to) the video camera so that the at least one ToF camera is oriented to capture 3D point-cloud data of the same scene that is filmed by the video camera. The pose tracking device comprises a localization unit that is configured to execute a pose determination functionality that comprises continuously capturing 2D image data of the environment by the one or more 2D cameras, continuously determining a pose of the video camera based at least on the 2D image data and/or the 3D point-cloud data, and generating pose data based on the determined pose. The pose tracking device comprises a data interface for providing a data connection with the video camera and/or a VFX engine, e.g. a VFX engine of the pose tracking system or of the film or TV production, and is configured to provide the pose data to the video camera and/or the VFX engine.

The pose tracking device may be fixedly attached to the video camera or embodied as a part of the camera. Alternatively, it may be connectable to the camera. Optionally, it may be built modular, i.e. comprise a number of separate modules, each of which being connectable to the camera. Optionally, the system may comprise the video camera.

According to one embodiment of the system, the pose tracking device comprises an inertial measurement unit (IMU), wherein the pose determination functionality comprises continuously capturing inertial data using the IMU, and generating the pose data is also based on the inertial data.

According to another embodiment of the system, the pose tracking device comprises a position-sensitive device, e.g. comprising a global navigation satellite system (GNSS) receiver and/or a compass, wherein the pose determination functionality comprises continuously capturing position data using the position-sensitive device and generating the pose data is also based on the position data.

According to another embodiment of the system, the pose determination functionality comprises the one or more ToF cameras continuously capturing 3D point-cloud data of the environment, and generating the pose data is also based on the 3D point-cloud data.

According to another embodiment of the system, the one or more 2D cameras are configured to capture the 2D image data with a rate of at least 5 operations per second, e.g. with a rate of at least 25 operations per second.

According to another embodiment of the system, the localization unit is configured to continuously track the pose of the video camera in six degrees-of-freedom.

According to another embodiment of the system, the pose tracking device is configured to provide the 3D point-cloud data of the set and the pose data to the VFX engine, and to generate the 3D point-cloud data of the set and the pose data in such a way that they can be used by the VFX engine for applying visual effects, augmented reality and/or an artificial background to the scene. The set optionally comprises at least one chroma keying screen or a video screen and/or is a virtual studio.

According to another embodiment of the system, the set comprises a video screen that displays an artificial background for the scene, wherein the pose tracking device is configured to provide at least the pose data to the VFX engine in real-time, the provided pose data allowing adapting display on the video screen in real-time to the pose of the video camera. Optionally, the pose tracking device is configured to provide also the 3D point-cloud data of the set to the VFX engine in real-time.

According to another embodiment of the system, the scene involves objects and/or actors being present on the set, and the 3D point-cloud data of the set captured by the at least one ToF camera comprises point-cloud data of the objects and/or actors. For instance, the set comprises a chroma keying screen used for adding visual effects, augmented reality, and/or artificial background to the scene in post-production, the objects and/or actors being in front of the chroma keying screen. If the objects and/or actors are moving during a take of the scene, the pose tracking device may be configured to detect the moving objects and/or actors in the 3D point-cloud data, to track positions of the moving objects and/or actors during the take, and to provide the point-cloud data of the set to the VFX engine, including the tracked positions of the moving objects and/or actors together with time stamps, e.g. so that the movements of the objects and/or actors can be made visible using a timeline slider.

Optionally, the 3D point-cloud data of the set comprising the point-cloud data of the objects and/or actors is provided to the VFX engine so that it can be used by the VFX engine to determine a 3D position for a visual effect to be applied to the scene relative to 3D positions of the objects and/or actors. In this case, advantageously, the 3D point-cloud data of the set comprising the point-cloud data of the objects and/or actors is provided to the VFX engine in real-time.

According to one embodiment of the system, the pose tracking device comprises at least three 2D cameras that are arranged on the device to provide 2D image data of different parts of the set.

According to another embodiment of the system, at least one 2D cameras is configured as a high-definition camera and arranged to provide 2D image data of the scene filmed by the video camera.

According to another embodiment of the system, at least one 2D camera can be configured as a wide angle camera arrangement or as a fisheye camera arrangement, for instance two or three 2D cameras are configured as wide angle or fisheye camera arrangements, comprising a high-resolution 2D camera and a wide angle or fisheye lens. For instance, said high-resolution 2D camera and wide angle or fisheye lens are arranged and configured to capture image data covering a visual field of 360° around a first axis and at least 160°, e.g. at least 190°, around a second axis that is orthogonal to the first axis.

According to another embodiment of the system, the laser emitters are configured to emit infrared light. In one embodiment, at least a subset of the laser emitters is configured to emit light pulses in the form of a pattern to generate a pattern of reflections of the light pulses, wherein the at least one ToF camera is configured for capturing three-dimensional point-cloud data using the pattern of reflections, particularly wherein the subset of the laser emitters comprises an optical lens, grating or mesh to produce the pattern, and/or the localization unit is configured to use the 3D point-cloud data of the pattern of reflections to perform a ToF SLAM functionality for simultaneous localization and mapping. In another embodiment, at least a subset of the laser emitters is configured to emit diffused infrared lighting, wherein the sensor array of each of the ToF cameras is configured to receive reflections of the diffused infrared lighting emitted by the one or more laser emitters, the ToF cameras are configured to generate intensity images based on the received reflections of the diffused infrared lighting, and the localization unit is configured to execute a Visual-SLAM and/or ToF-SLAM functionality using the intensity images received from the ToF cameras for simultaneous localization and mapping, particularly also using 2D image data of the 2D cameras and/or localization data of the localization unit.

According to another embodiment, the system comprises the VFX engine and the VFX engine is configured to apply visual effects, augmented reality and/or an artificial background to the scene, for instance wherein the set comprises at least one chroma keying screen or a video screen and/or is a virtual studio, and to generate and/or adapt, using at least the pose data, VFX data that is related to the visual effects, the augmented reality and/or the artificial background. Optionally, the pose tracking device is configured to provide at least the pose data to the VFX engine in real-time and the VFX engine is configured to adapt, in real-time and based on the pose data, an artificial background displayed on a video screen at the set to the pose of the video camera, and/or to generate, using the generated VFX data and video stream data generated by the video camera, live feedback data, and to provide, in real-time, the live feedback data to a display unit at the set, e.g. to a display unit of the pose tracking device, for visualizing the live feedback data as a live feedback video. Optionally, the VFX data is related to visual effects, the pose tracking device is configured to provide also the 3D point-cloud data to the VFX engine in real-time, and the VFX engine is configured to use the 3D point-cloud data for generating the VFX data, e.g. for defining 3D positions of the visual effects in the live feedback video.

A second aspect of the invention pertains to a method for tracking a pose of a video camera in an environment, wherein the environment comprises a set of a film or TV production and the video camera is used for filming a scene at the set. The method comprises continuously capturing, using one or more ToF cameras positioned at the video camera, 3D point-cloud data of the scene, and performing a pose determination functionality to generate pose data for the video camera. Said pose determination functionality is performed by a pose tracking device at the video camera, e.g. the pose tracking device of the pose tracking system according to the first aspect. The pose determination functionality comprises continuously capturing 2D image data of the environment with one or more 2D cameras, and continuously generating, based on the 2D image data and/or the 3D point-cloud data, pose data related to a pose of the video camera. The method further comprises generating and/or adapting, using at least the pose data, VFX data that is related to visual effects, augmented reality and/or an artificial background for the scene.

According to one embodiment, the scene involves objects and/or actors (performers) being present on the set, and the 3D point-cloud data of the set captured by the at least one ToF camera comprises point-cloud data of the objects and/or actors, e.g. wherein the set comprises a chroma keying screen behind the objects and/or actors (from the point-of view of the ToF camera) . Then, also the 3D point-cloud data of the scene is used for generating and/or adapting the VFX data.

In one embodiment, the 3D point-cloud data of the set comprising the point-cloud data of the objects and/or actors is used to determine a 3D position for a visual effect to be applied to the scene relative to 3D positions of the objects and/or actors, particularly wherein 3D positions of the objects and/or actors are determined in real-time.

In another embodiment, the objects and/or actors are moving during a take of the scene, and the method comprises detecting the moving objects and/or actors in the three-dimensional point-cloud data, and tracking positions of the moving objects and/or actors during the take. For instance, the three-dimensional point-cloud data of the scene is visualized together with the tracked positions, and a user (e.g. in post-production) is enabled to visualize movements of the objects and/or actors using a timeline slider.

According to some embodiments, the digital camera is moved through the environment along a trajectory while capturing the video stream of the scene, and the pose data also relates to the trajectory of the video camera.

In one embodiment, the set comprises a chroma keying screen or a video screen for applying an artificial background to the scene. For instance, the scene comprises objects in front of the chroma keying screen or video screen, and the objects and/or actors are moving while the video camera is moved along the trajectory. The artificial background may comprise 3D virtual objects such as a landscape, moving virtual objects or visual effects.

According to some embodiments, the pose determination functionality comprises continuously capturing inertial data using an IMU and/or position data, wherein generating the pose data is also based on the inertial data and/or position data. For instance, the pose tracking device comprises the IMU and/or a GNSS receiver used for capturing the position data.

According to some embodiments, the pose tracking device comprises the one or more 2D cameras and the one or more ToF cameras, and generating the pose data is also based on the 3D point-cloud data.

According to some embodiments, generating and/or adapting the VFX data is performed by a VFX engine, wherein video stream data from the video camera is received by the VFX engine.

In one embodiment, generating and/or adapting the VFX data is also based on the video stream data. In another embodiment, the video stream data and the pose data are continuously received by the VFX engine. In another embodiment, the video stream data comprises the pose data as meta data. In another embodiment, the method comprises capturing, using the video camera, a video stream of the scene, wherein the video stream data is generated based on the video stream.

According to some embodiments, the set comprises at least one chroma keying screen that is used for applying an artificial background to the scene, the method comprising generating, using at least the pose data, VFX data that is related to the artificial background for the scene, generating, using the VFX data and video stream data generated by the video camera, live feedback data, providing the live feedback data to a display unit, e.g. of the pose tracking device, and visualizing, in real time, the live feedback data as a live feedback video, e.g. to an operator of the video camera, wherein the artificial background is visualized on the chroma keying screen in the live feedback video.

According to some embodiments, the method comprises adapting, in real-time and based on the pose data, an artificial background displayed on a video screen at the set to a current pose of the video camera.

According to some embodiments, the method comprises generating, using the generated VFX data and video stream data generated by the video camera, live feedback data, providing, in real-time, the live feedback data to a display unit at the set, e.g. of the pose tracking device, and visualizing the live feedback data as a live feedback video, for instance wherein the VFX data is related to visual effects, and the 3D point-cloud data is used for generating the VFX data, e.g. for defining 3D positions of the visual effects in the live feedback video.

According to some embodiments, the method comprises applying visual effects, augmented reality and/or an artificial background to the scene based on the VFX data, e.g. wherein the set comprises at least one chroma keying screen or a video screen and/or is a virtual studio.

The aspects of the invention are described or explained in more detail below, purely by way of example, with reference to working examples shown schematically in the drawing. Identical elements are labelled with the same reference numerals in the figures. The described embodiments are generally not shown true to scale and they are also not to be interpreted as limiting the invention.
- Figs. 1a-d: show two exemplary embodiments of a pose tracking device of a system according to the invention;
- Fig. 2: shows an exemplary embodiment of a pose tracking device mounted on an exemplary film camera;
- Figs. 3a,b: show an exemplary mounting procedure of the device on the film camera;
- Fig. 4: shows the use of an exemplary embodiment of the pose tracking system while filming a scene in front of a chroma keying screen;
- Fig. 5: illustrates the generation of live feedback data to be visualized on a display of the device of Fig. 4;
- Fig. 6: shows the use of an exemplary embodiment of the pose tracking system while filming a scene in front of an LED screen;
- Fig. 7: illustrates the adaption of the live background data to be visualized on a display of the LED screen of Fig. 6;
- Fig. 8: shows a flow chart illustrating a first exemplary embodiment of a method according to the invention; and
- Fig. 9: shows a flow chart illustrating a second exemplary embodiment of a method according to the invention.

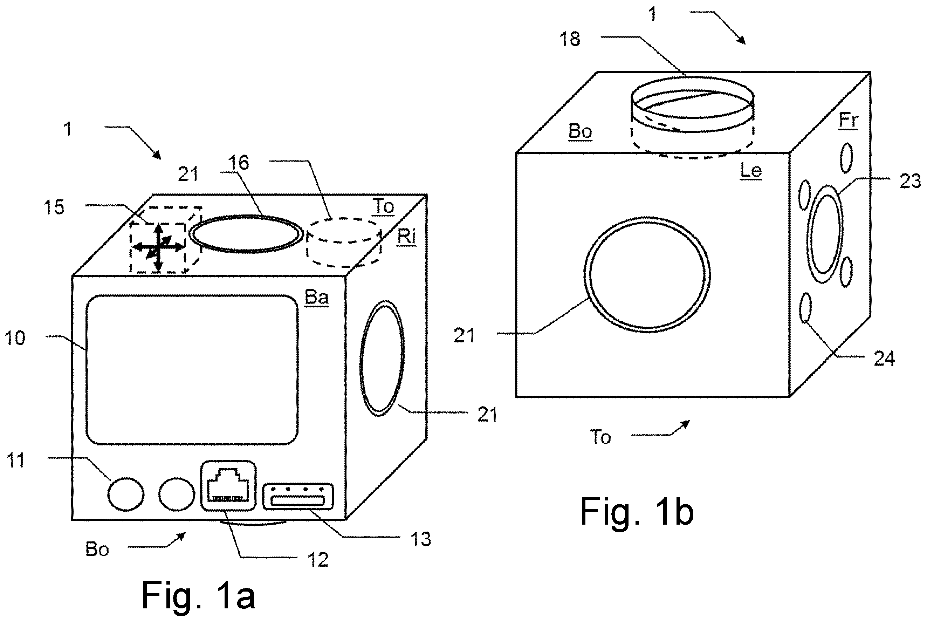

Figures 1a to 1d show two exemplary embodiments of a pose tracking device 1 as part of a system according to the invention. Advantageously, this device reduces the initial setup time by enabling a simple calibration workflow.

In the shown examples, the device is basically cubical, having six sides: top (To), bottom (Bo), front (Fr), back (Ba), left (Le) and right (Ri). On its front side, the device 1 comprises a time-of-flight (ToF) camera unit having one or more ToF cameras 23 and an imaging unit comprising at least one "regular", i.e. two-dimensional (2D) camera 21, particularly an RGB or monochrome camera. Optionally, some or all of the 2D cameras 21 can be high-resolution (HR) cameras.

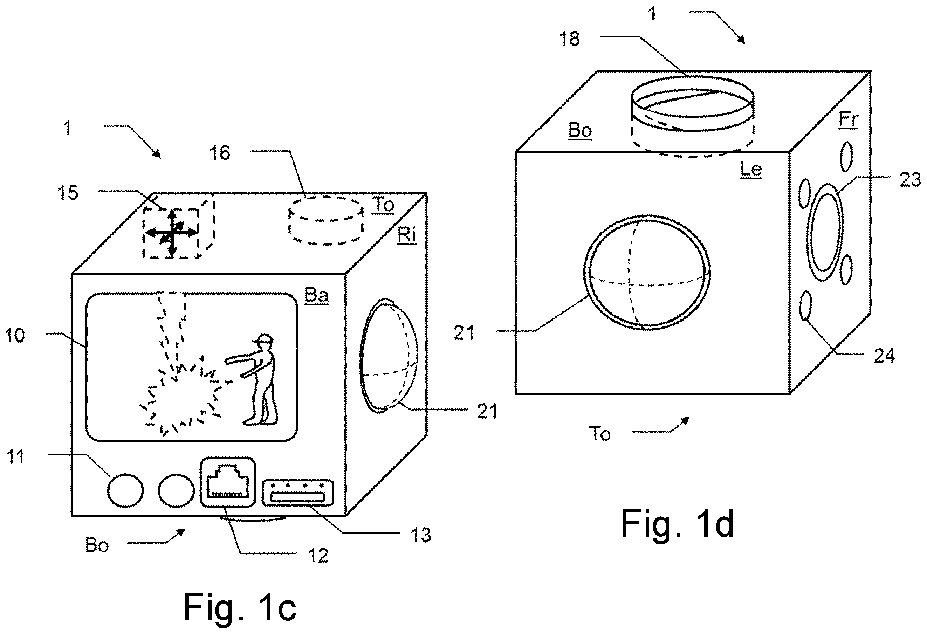

The 2D cameras 21 are preferably arranged and configured to cover a large field of view around the device that allows tracking a pose of the device 1. Figures 1a and 1b show a first embodiment, wherein the imaging unit comprises three 2D cameras 21 that are positioned on the top, right and left sides. Figures 1c and 1d show a second embodiment, wherein the 2D cameras are embodied as two wide angle or "fisheye" cameras 21' on the left and right sides of the device 1 that are configured to cover basically a full dome view around the device. Each fisheye camera 21' comprises a camera and an ultra-wide-angle "fisheye lens" for capturing image data with (at least) a hemispherical field of view. In both embodiments, optionally a further high-resolution 2D camera may be provided on the front side alongside the ToF camera 23.

ToF cameras are range-imaging camera systems generally known in the art and employ time-of-flight techniques to resolve distance between the camera and the subject for each point of the image, by measuring the round trip time or the phase shift of an artificial light signal, e.g. provided by a laser or an LED. Laser-based ToF cameras are part of a broader class of "scannerless" LIDAR (i.e. LIDAR without mechanically moving scanning elements, also referred to as "solid state LIDAR"), in which the entire scene (or large parts thereof) is captured with each laser pulse, as opposed to point-by-point with a laser beam such as in scanning LIDAR systems. The spatial resolution of ToF cameras is generally low compared to standard 2D cameras. Compared to other 3D laser scanning methods for capturing 3D images, ToF cameras operate more quickly and provide better point grids.

In general, ToF cameras measure a time delay between the emission of a light signal and the detection of the back-reflected signal. Sometimes, these cameras are also referred to as Range-Imaging Cameras or RIM cameras. Different kinds of ToF cameras exist that may be used. Some embodiments of the reality capture device according to the invention may comprise ToF cameras that use Direct-Time-of-Flight (dToF), i.e. direct measurement of the time delay between two adjacent pulses. These are also referred to as Pulsed-Time-of-Flight (pToF). Other embodiments may comprise ToF cameras that use Indirect-Time-of-Flight (iToF), i.e. using a periodic waveform and phase delay to obtain the time delay. These are also referred to as Continuous-Wave Time-of-Flight (cwToF).

In this embodiment, the ToF camera 23 is surrounded by four infrared laser emitters 24, wherein the ToF camera 23 is configured to receive reflections of light pulses emitted by the infrared laser emitters 24 and to measure distances to the reflecting surfaces using known time-of-flight principles.

These laser emitters 24 can be passive emitters that are connected to a central laser source of the device optionally amplified by e.g. an erbium-doped fibre amplifier, the passive emitters e.g. comprising fibre couplings, diffraction gratings or fibre-splittings. Alternatively, the laser emitters 24 can be active emitters, e.g. laser diodes or vertical-cavity surface-emitting laser (VCSEL) arrays that may be provided on the same printed circuit board as the ToF camera 23. Additionally, a lens can be placed in front of a VCSEL to collimate the emitted laser beam. In order to reduce noise and to enhance the accuracy and/or distance range, some or all of the emitters 24 may be configured to project constant light patterns into the surrounding, so that only a subset of the pixels of the ToF sensor receives range information of the surrounding from the reflection of the light emitted by these emitters 24. In one embodiment, some or all of the emitters 24 are configured to project light patterns, e.g. by projecting light through a diffractive or refractive grating or a mesh, and other emitters 24 are configured to emit light without a pattern, so that the reflections illuminate the ToF sensor completely. If the emitters 24 emit the light sequentially, the patterned incomplete but accurate range images can be used to enhance the results of the complete but noisy range images.

Additionally or alternatively, the ToF cameras may be configured to capture intensity images. The intensity images comprise brightness information of the surrounding and can be used for performing visual SLAM based on these intensity images, while the device is moved through the surrounding. To produce intensity images, the emitters may emit diffused lighting instead of projected patterns. The emitters 24 preferably emit infrared light, since this is invisible to the human eye and does not interfere with the shooting of a film.

The mobile reality capture device 1 comprises a localization unit (not shown here) for the purpose of providing a pose and trajectory determination functionality for continuously determining a pose and a trajectory of the device 1 based on two-dimensional image data and/or three-dimensional point-cloud data generated by the 2D and ToF cameras, respectively. The localization unit may comprise a processor for calculating poses from raw data and generating pose data and a data storage for storing raw data and/or pose data.

For instance, the localization unit comprises an inertial measurement unit (IMU) 15 and a GNSS receiver 16. The localization unit may also comprise other sensors, such as a compass and a barometer, or be configured to deduce a position of the device from wireless communication signals such as WLAN. The localization unit 14 may also be configured to execute a simultaneous localization and mapping (SLAM) functionality image data generated by the cameras 21. Optionally, also the 3D data generated by the ToF cameras 23 and/or data from the IMU may be used for improving the SLAM functionality.

Each ToF camera 23 has one or more laser emitters 24, arranged and configured to emit light pulses towards surfaces in the surrounding that lie in a field of view of a sensor array of the same ToF camera. For the purpose of performing SLAM or detecting a pose and trajectory of the device 1, the light pulses may be emitted discretely and need not be distributed to cover the entire field of view.

Optionally, the environment can be surveyed during the movement of the pose tracking device 1, wherein the data from the ToF cameras and the imaging unit captured at different locations is referenced to each other by means of the localization unit, e.g. within the scope of a SLAM (simultaneous localization and mapping) functionality. Because of the movement of the device, objects and spatial area can be measured from different angles, as a result of which, shadowing and/or dead angles can be avoided. Thus, e.g. after each take, a 3D map of the set including 3D positions of actors and objects on the set can be provided. Optionally, also paths (trajectories) of the actors (and moving objects) during the take can be visualized. For instance, this 3D information may facilitate and accelerate the process of adding 3D visual effects or virtual objects to the scene during post-production.

The 2D cameras of the imaging unit may comprise one or more cameras configured for use in a visual SLAM (V-SLAM) functionality, one or more colour cameras, e.g. for colouring the digital representation of the environment (3D point cloud or mesh), one or more high resolution cameras, e.g. for providing a high-resolution detail image, one or more high dynamic range (HDR) cameras, e.g. single exposure HDR cameras, one or more multispectral, particularly hyper-spectral, cameras, e.g. for identification of surface properties or for differentiating different kinds of surfaces, and one or more thermal cameras, e.g. for providing temperature information. In particular, one or more cameras may comprise more than one or all of the above features.

The pose tracking device 1 may comprise further sensors. In the shown embodiment, it includes an inertial measuring unit (IMU) 15 and a global navigation satellite system (GNSS) transceiver 16 that may feed their data to the localization unit to support the pose and trajectory determination functionality, or for referencing the data of the pose tracking device 1 with a global coordinate system.

On its back side, the device 1 comprises a display unit 10, buttons 11 allowing a user to operate the device and electronic connectors 12, 13 (e.g. USB, HDMI and/or LAN connectors) for connecting the device 1 via cables to other devices, particularly to a film camera and/or to a VFX engine, for exchanging data and providing the device 1 with electric energy.

On its bottom side, the device 1 comprises a connector 18 that allows releasably mounting the device 1 to a film camera or similar device.

In particular, the device 1 is configured to transmit pose data to an external VFX engine by means of a data streaming started simultaneously or at least close in time relative to the measurement process, e.g. via WLAN or Bluetooth or cable connection, so that the processing of the pose data on the VFX engine can take place essentially parallel to the data acquisition.

The localization unit may be configured to determine a trajectory of the mobile reality capture device 1 with six degrees of freedom (6DOF), i.e. involving position and orientation (pose) of the mobile reality capture device. In particular, the pose tracking device 1 may be configured for simultaneous localization and mapping (SLAM) to generate a three-dimensional map by involving at least one of data of an inertial measurement unit (IMU-SLAM), image data of the camera unit for visual SLAM (V-SLAM), and - similar to LIDAR-SLAM - using data of the ToF cameras for ToF-based SLAM mapping (ToF-SLAM). This approach is described generically in the paper "SLAM combining ToF and High-Resolution cameras" by V. Castañeda, D. Mateus and N. Navab (Computer Aided Medical Procedures (CAMP), Technische Universitat München).

The device 1 shown here comprises all of the described components (2D cameras 21, ToF cameras 23, IMU 15 etc.) in a common housing. However, alternatively, the device 1 may be built modular, i.e. comprise a plurality of separate modules, each of which being connectable to the camera and comprising one or more units of the device 1, e.g. at least one of 2D cameras, ToF cameras or IMU. Also, alternatively, the localization unit need not be connected to the film camera, but may receive raw data from the components attached to the film camera through a wireless data connection.

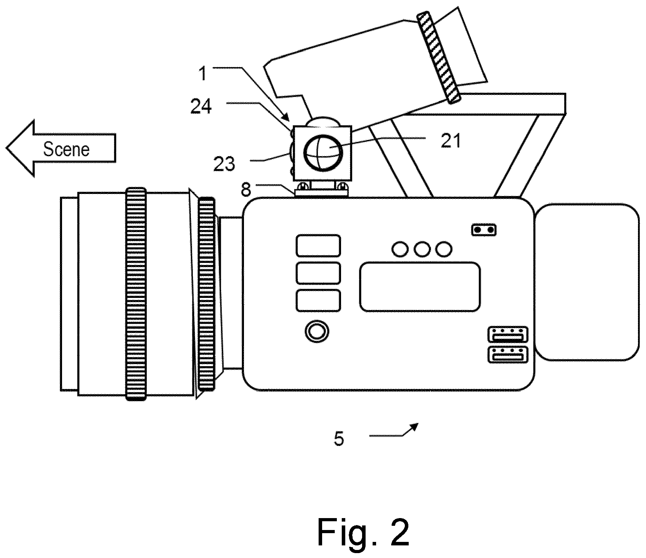

Figure 2 shows the device 1 of Figures 1a and 1b mounted on an exemplary embodiment of a film camera 5. A front side of the device comprising a time-of-flight camera 23 and laser emitters 24 is oriented towards the scene filmed by the film camera 5. This means that if the film camera 5 films along an optical axis into a first direction, the ToF camera 23 is arranged to capture 3D in the same direction and parallel or basically parallel to the optical axis, so that the field-of-view of the ToF camera is the same (or basically the same) as the field-of-view of the film camera 5. Basically the same field-of-view means that the field-of-view of the ToF camera(s) 23 at least comprises a large portion (e.g. at least 50% or at least 75%) of the field-of-view of the film camera 5 or is larger than and comprises the complete field-of-view of the film camera 5.

On the back side, i.e. opposing the front side and being oriented to the camera operator, a display unit 10 is provided. The device 1 needs to be mounted on the camera 5 securely and free of play to exactly follow the pose of the camera 5. In the shown example this is done by a quick-release unit 8 that is fixedly mounted on the camera 5 and allows attaching the device 1 releasably to the camera 5.

The ToF camera 23 on the front side of the device 1 is directed towards the scene so that it can capture 3D data of the scene filmed by the camera 5. The ToF camera 23 can thus generate live depth images of the scene. For the purpose of film making, the distance to be covered by the depth images, i.e. in which the 3D data can be captured with sufficient precision, should be more than six metres, e.g. about at least eight to ten metres, preferably at least twelve metres.

For instance, this can be used to determine 3D positions of objects and actors at the set and to track their movements during a take of the scene. This information can be provided to post-production operators to facilitate adding visual effects or virtual objects to the scene so that they can be integrated having realistic 3D positions relative to the real objects and actors. If the information is provided in real-time to a VFX engine, a preview of these added visual effects or virtual objects in the real scene may be generated and displayed in real-time. For instance, this preview may help the camera operator in optimizing the camera work. In this case, optionally, the feedback may be provided on a display of the pose tracking device 1. Also, the preview may help a director to decide whether a take has to be repeated because actors did not react correctly to visual effects or virtual objects or did not leave enough space for adding them. 3D point clouds or depth maps captured during several takes at the same set may be used for mapping the set, thereby providing a 3D data for parts of the set not filmed during a certain take. The 3D data may also be provided as a mesh.

Pose data or timestamps related to the poses can be provided to the camera 5 in real time or after a take, e.g. by cable or by WiFi, so that the video stream can be synchronized with the determined poses.

Optionally, the system may also comprise the camera 5. For instance, the pose tracking device 1 may be integrated into the camera 5.

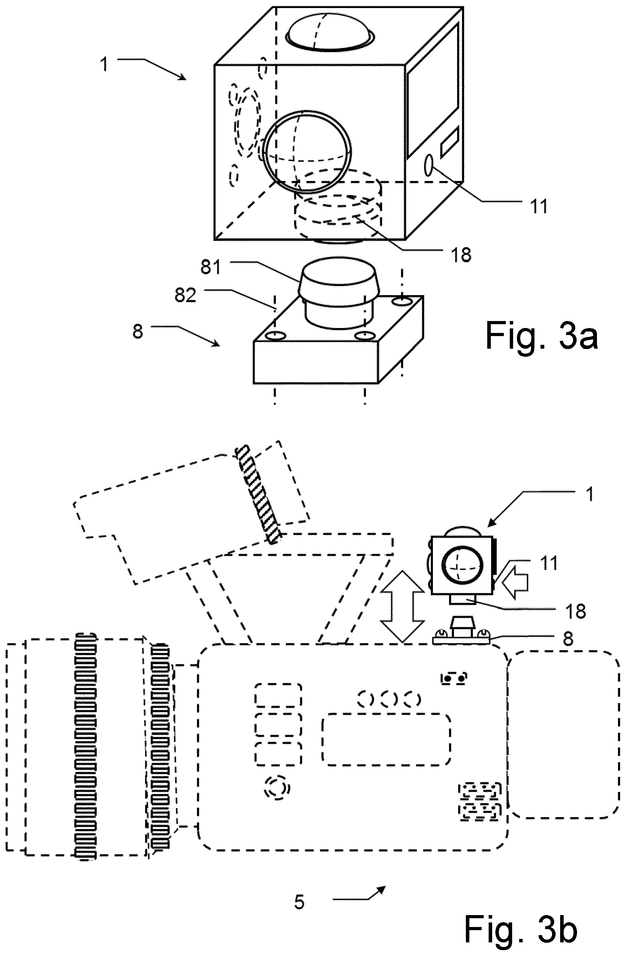

Figures 3a and 3b show an exemplary procedure of releasably mounting the device 1 on the film camera 5. Figure 3a shows the quick-release unit 8 to be connected with a mechanical adaption interface 18 on the bottom side of the pose tracking device 1. In the shown example, the quick-release unit 8 comprises a male connector 81 to be inserted into the mechanical adaption interface 18. While connected, the pose tracking device 1 is connected free of play to the quick-release unit 8. A mechanical button 11 may be provided on the pose tracking device 1 to release the device from the quick-release unit 8. For securely connecting the quick-release unit 8 to the camera 5, holes 82 may be provided to screw or bolt the unit 8 to the camera 5. Alternatively, the quick-release unit 8 may be glued or fixed in other ways to a body of the camera 5.

In the example of Figure 3b, the quick-release unit 8 is securely attached to the camera 5 by means of four screws. The pose tracking device 1 may be attached to the camera 5 by inserting the male connector of the quick-release unit 8 into the adaption interface 18. To release the device 1 from the camera 5, in the shown example, the button 11 needs to be pushed, which allows pulling the device 1 off the quick-release unit 8. Optionally, the button 11 is pushed outwards when the device is connected to the quick-release unit 8 (see Figure 2) and needs to pushed in with some force to release the device 1. Optionally, the quick-release may also be configured for data transfer, wherein a data connection is established when the device is fixedly connected onto the quick-release unit 8. Also optionally, the device may receive electric energy via the quick-release unit 8. For instance, inductive coils may be provided in the device 1 and in the quick-release unit 8 that allow operating the device 1 or charging a battery of the device 1 when connected.

The device 1 may also be adapted for other uses. For instance, it may be adapted as a multipurpose navigation, perception and metaverse content creation solution. Use cases include providing sensor add-ons for surveying devices or robots and providing perception capabilities for:
- providing security at large events or in museums,
- providing positioning and navigation functionality for robots,
- performing body scans for avatar creation, e.g. in the metaverse or for clothing generation,
- providing machine control functionalities on construction equipment, e.g. for blade control and safety measures,
- surveying warehouses to improve the supply chain,
- construction applications, including stake out and large-scale 3D printing, and
- assembling very large structures such as airplanes and wind turbines.

Thus, the device 1 may solve the problem of accurate localization globally as well as locally in new and already known environments. Localization can then be used to create location-aware content, such as 3D models or avatars. The combination of precise localization and content generation will allow users and robots to be spatially aware by understanding their environment.

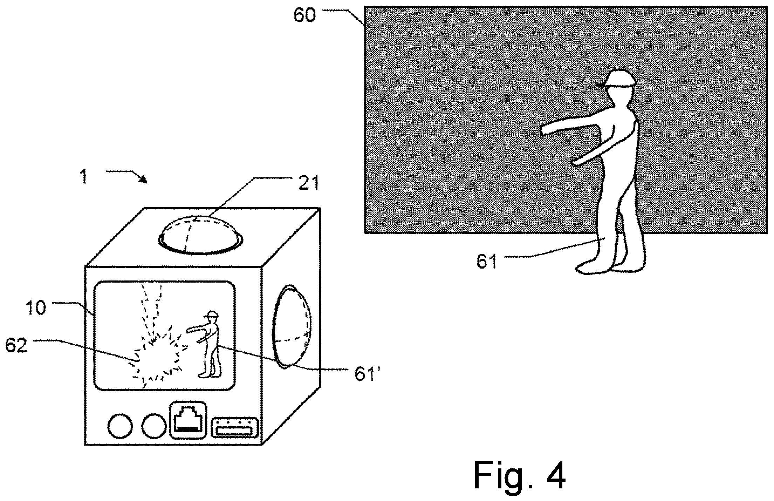

Figure 4 illustrates the use of the pose tracking device 1 in shooting a film scene to which virtual effects and an artificial background will be added. A chroma keying screen 60 (for instance a green screen or blue screen) is present in a background of the scene and at least one (real) actor 61 performs before the screen 60. The screen 6 can be used to add a virtual background including visual effects during post-production, wherein the virtual background is not visible in the real scene. If the scene is part of a live show, e.g. a weather forecast presented by a weatherman, the virtual background can also be provided in real-time. However, it is still not visible in the real scene.

During the shooting, the device 1 is fixedly connected to the film camera (not shown here) and captures 3D data of the scene, to generate a point cloud and/or a depth image. This allows providing a 3D map or a mesh of the set as visible from the film camera. The 3D data also provides information regarding a distance of the actor 61 from the camera and optionally 3D positions of the actor 61 during a scene, thus facilitating adding virtual effects to the scene that appear more realistic regarding their position or trajectory relative to those of the actor or actors.

As shown here, in some embodiment, the display unit 10 of the device 1 may visualize, in real time, the scene including an image of the real actor 61' together with the virtual background (or a preview comprising a preliminary background). Additionally or alternatively, the visualized scene may comprise visual effects 62 (or a preview thereof) that may be part of the background or be visualized next to the imaged actor 61' (e.g. between a plurality of actors) or even in front of the imaged actor 61'. Advantageously, this may allow the camera operator (also called director of photography or cinematographer) to improve the camera work, e.g. the positioning and/or moving of the camera during a scene. Alternatively, a preview may be visualized in real-time on an external display, e.g. to improve stage direction for the actors.

In embodiments, in which the display unit 10 need not be capable of displaying live images, it can be configured as an electronic-paper (e-ink) display.

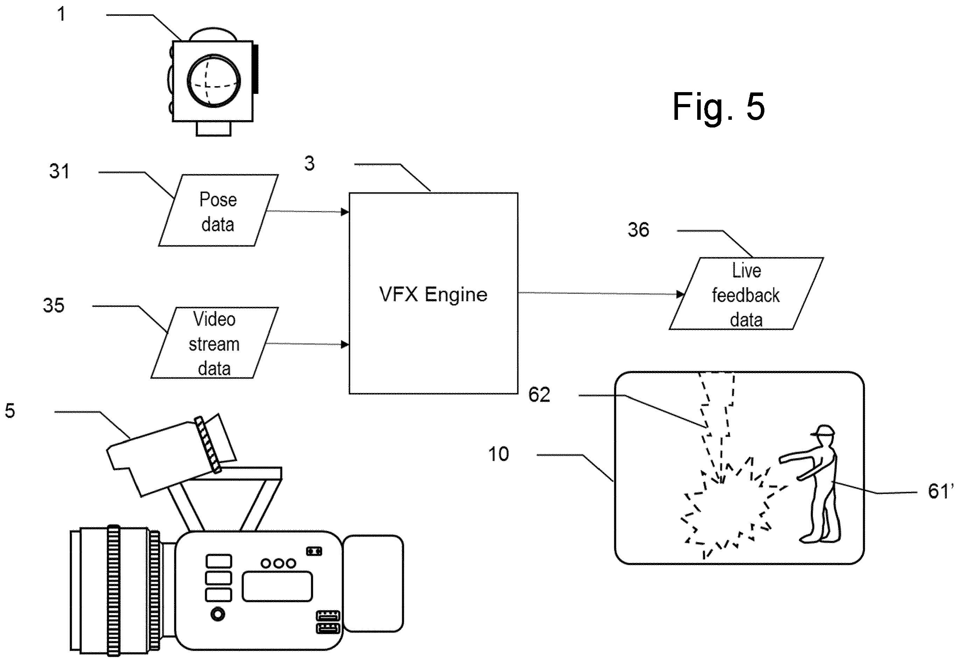

Figure 5 illustrates the data flow in the example of Figure 4. The video camera 5 produces a video data stream 35 that optionally may be provided to the VFX engine 3. At the same time, the pose tracking device 1 provides the pose data 31 indicating the pose of the video camera 5 to the VFX engine 3. The pose data 31 needs to be time-stamped or synchronized with the video data stream 35 in order to be able to determine the correct pose for each frame of the video. For instance, the pose data 31 may comprise one pose per frame of the video stream, or every pose may comprise a time stamp that allows assigning each pose to the respective frame or frames. Optionally, for synchronizing the poses with the video stream, the device and the camera may be in constant data connection. For instance, the device may send pose data in real-time to the camera so that the video stream data 35 already comprises the pose data 31 as metadata, or effect the camera to add time stamps to the video stream data 35 as metadata, which correspond to the time stamps of the pose data 31.

Since the pose tracking device 1 is connected fixedly (free-of-play) to the digital camera 5 until released, the pose of the digital camera 5 directly depends on the pose of the 2D cameras of the device 1. Therefore, the pose of the digital camera 5 can be derived directly from the pose derived by the 2D cameras without needing additional calculations. The pose data 31 may thus relate at the same time to the pose of the device 1 and to the pose of the camera 5.

The VFX engine 3 uses the pose data 31 to calculate live feedback data 36 that comprises the virtual background that replaces the screen. The live feedback data is provided to the pose tracking device 1 and used to display on a display unit 10 of the device, the captured scene in real-time, wherein behind the captured real image of the actor 61, the artificial background is shown comprising virtual objects and/or visual effects 62.

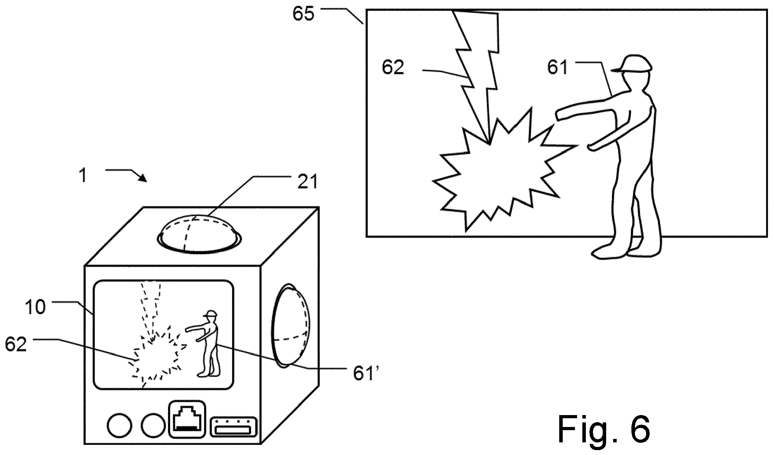

Figure 6 illustrates the use of the pose tracking device 1 in shooting a film scene that involves the use of an LED screen 65. During the shooting, the device 1 is fixedly connected to the film camera (not shown here). An actor 61 performs before the screen 65, which shows a virtual background including visual effects, wherein the virtual background is visible in the real scene.

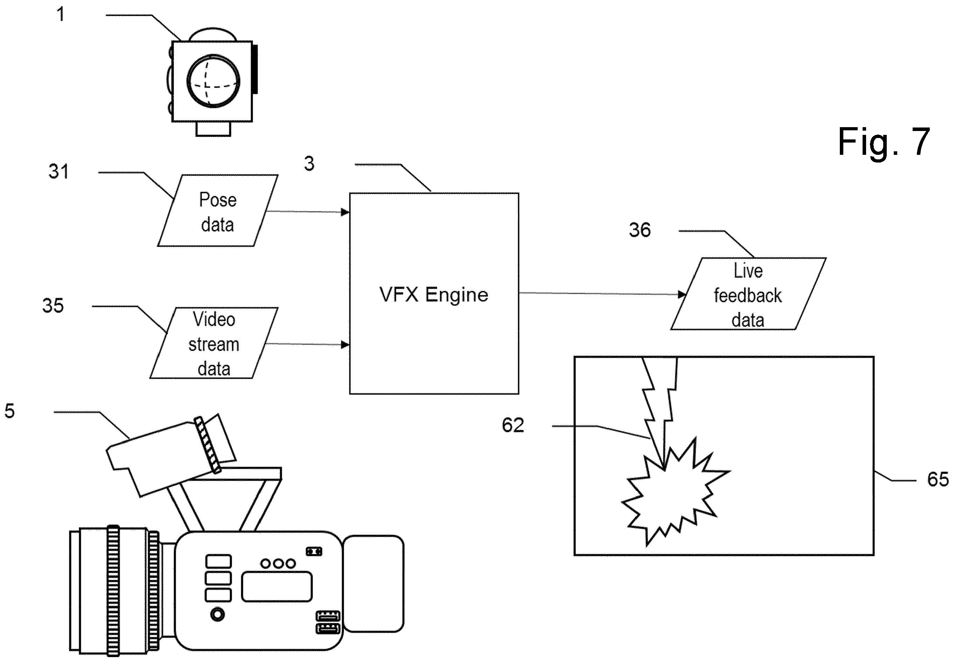

Figure 7 illustrates the data flow in the example of Figure 6. The video camera 5 produces a video data stream 35 that optionally may be provided to the VFX engine 3. At the same time, the pose tracking device 1 provides the pose data 31 indicating the pose of the video camera 5 to the VFX engine 3. The VFX engine 3 uses the pose data 31 to adapt the live background data 37 that comprises the virtual background shown on the screen 62. The background data 37 is provided to the screen so that the display artificial background comprising virtual objects and/or visual effects 62 changes together with the changing pose of the video camera 5.

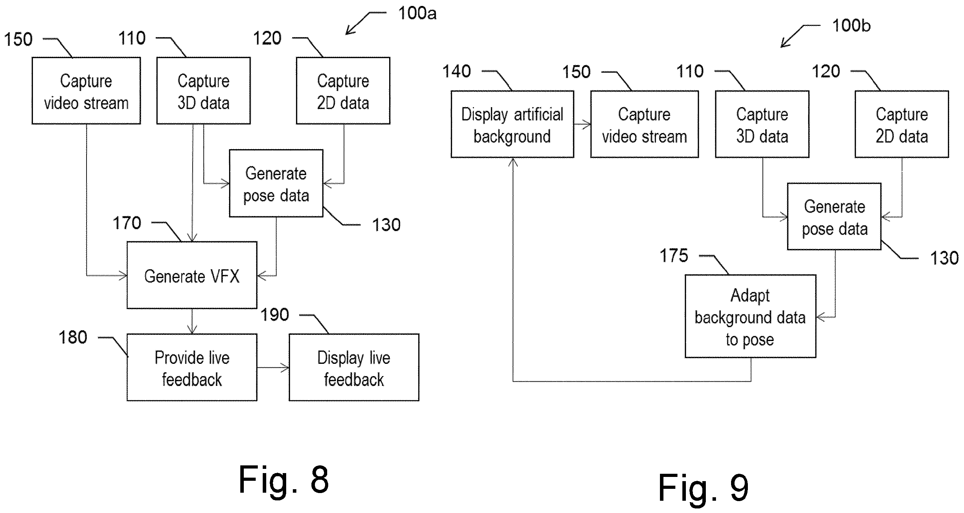

Figures 8 and 9 show two flowchart, each illustrating an exemplary embodiment of a method 100 according to the invention.

Both methods start with continuously capturing 3D data and 2D data, particularly using a pose tracking device according to the invention (steps 110, 120). Using these 3D data and 2D data (or only the 2D data), pose data for the digital video camera is generated 130. At the same time, said digital video camera captures a video stream of a scene, e.g. at a film set or TV studio (step 150). The pose data (and optionally the video stream data) are used by a computer program product, e.g. running on a VFX engine, to produce VFX data for visual effects, or an artificial background.

In the method 100a of Figure 8, these visual effects or artificial background cannot be seen in the real scene but are to be projected onto chroma keying screens 60 (for instance green or blue screens) that are present in the scene. The method 100a comprises generating 170 the VFX data based at least on the generated 130 pose data, so that an artificial background that fits the pose of the camera can be added to the captured video stream. For instance if the VFX data relates to virtual objects or visual effects in front of real objects or actors, also the 3D data can be used for generating 170 the VFX data.

As shown here, also the captured 150 video stream may be used for generating 170 the VFX data. In the shown embodiment of the method 100a of Figure 8, the generated background data is further used to provide 180 live feedback and to display 190 this live feedback. This allows the camera operator to view the scene including the otherwise not visible artificial background. Especially in a live show where no post-production is possible, this can improve the camera work. For instance, the live feedback can be provided to the pose tracking device and be displayed on a display unit of the device. Alternatively, a display present at the scene can display the live feedback.

In the method 100b of Figure 9, this artificial background is visible in the real scene, since it is displayed 140 in high resolution on a video screen (LED wall, video wall). This background comprises 3D features, e.g. a landscape, which should be displayed differently depending on the position of the camera to maintain the illusion of a real 3D background in the video. Therefore, the method 100b comprises adapting the background data in real-time based at least on the generated 130 pose data and provided to the screen to continuously adapt the displaying 140 of the artificial background. Since the background is visible in the scene, in this embodiment no live feedback for the camera operator is necessary. The captured 150 video stream is thus adapted in real-time based on the current camera pose.

To allow the insertion of the virtual background into the live-action footage with correct position, scale, orientation, and motion relative to the photographed objects, adapting the background data in real-time comprises match moving. Match moving is primarily used to track the movement of a camera through a shot so that an identical virtual camera move can be reproduced in a 3D animation program. When new animated elements are composited back into the original live-action shot, they will appear in perfectly matched perspective and therefore appear seamless.

Scale can be provided by the 3D data from the ToF camera together with the digital camera footage.

Although the invention is illustrated above, partly with reference to some preferred embodiments, it must be understood that numerous modifications and combinations of different features of the embodiments can be made. All of these modifications lie within the scope of the appended claims.

## Claims

1. Pose tracking system for continuously determining a pose of a video camera (5) while filming a scene at a set of a film or TV production, the system comprising an imaging unit with one or more 2D cameras (21, 21') configured to provide two-dimensional image data of an environment,
**characterized in that**
the system comprises a pose tracking device (1) that comprises the imaging unit and at least one time-of-flight camera (23) comprising a sensor array and one or more laser emitters (24), the time-of-flight camera (23) being configured for capturing three-dimensional point-cloud data of the set, wherein the pose tracking device (1)
- is attached to or configured to be attached to the video camera (5) so that the at least one time-of-flight camera (23) is oriented to capture three-dimensional point-cloud data of the scene filmed by the video camera (5);
- comprises a localization unit that is configured to execute a pose determination functionality that comprises continuously capturing two-dimensional image data of the environment by the one or more 2D cameras (21, 21'), continuously determining a pose of the video camera (5) based at least on the two-dimensional image data and/or the three-dimensional point-cloud data, and generating pose data based on the determined pose; and
- comprises a data interface for providing a data connection with a the video camera (5) and/or a VFX engine (3), particularly a VFX engine (3) of the pose tracking system or of the film or TV production, wherein the pose tracking device (1) is configured to provide the pose data to the video camera (5) and/or the VFX engine (3).

2. Pose tracking system according to claim 1, wherein
- the pose tracking device (1) comprises an inertial measuring unit (15), wherein the pose determination functionality comprises continuously capturing inertial data using the inertial measuring unit (15) and generating the pose data (31) is also based on the inertial data;
- the pose tracking device (1) comprises a position-sensitive device (16), particularly comprising a GNSS receiver and/or a compass, wherein the pose determination functionality comprises continuously capturing position data using the position-sensitive device (16) and generating the pose data (31) is also based on the position data; and/or
- the pose determination functionality comprises the one or more time-of-flight cameras (23) continuously capturing three-dimensional point-cloud data of the environment, and generating the pose data (31) is also based on the three-dimensional point-cloud data, particularly wherein
- the one or more 2D cameras (21, 21') are configured to capture the two-dimensional image data with a rate of at least 5 operations per second, particularly at least 25 operations per second; and/or
- the localization unit is configured to continuously track the pose of the digital video camera (5) in six degrees-of-freedom.

3. Pose tracking system according to claim 1 or claim 2, wherein the pose tracking device (1) is configured to provide the three-dimensional point-cloud data of the set and the pose data to the VFX engine (3), and to generate the three-dimensional point-cloud data of the set and the pose data in such a way that they can be used by the VFX engine (3) for applying visual effects (62), augmented reality and/or an artificial background to the scene, particularly wherein the set comprises at least one chroma keying screen (60) or a video screen (65) and/or is a virtual studio.

4. Pose tracking system according to any one of the preceding claims, wherein the set comprises a video screen (65) that displays an artificial background for the scene, wherein the pose tracking device (1) is configured to provide at least the pose data to the VFX engine (3) in real-time, the provided pose data allowing adapting display on the video screen (65) in real-time to the pose of the digital video camera (5), particularly wherein the pose tracking device (1) is configured to provide also the three-dimensional point-cloud data of the set to the VFX engine (3) in real-time.

5. Pose tracking system according to any one of the preceding claims, wherein the scene involves objects and/or actors (61) being present on the set, and the three-dimensional point-cloud data of the set captured by the at least one time-of-flight camera (23) comprises point-cloud data of the objects and/or actors (61), particularly wherein the set comprises a chroma keying screen (60) used for adding visual effects (62), augmented reality, and/or artificial background to the scene in post-production, the objects and/or actors (61) being in front of the chroma keying screen (60), wherein
- the objects and/or actors (61) are moving during a take of the scene, and the pose tracking device (1) is configured
- to detect the moving objects and/or actors (61) in the three-dimensional point-cloud data,
- to track positions of the moving objects and/or actors (61) during the take, and
- to provide the point-cloud data of the set to the VFX engine (3), including the tracked positions of the moving objects and/or actors (61) together with time stamps, particularly so that the movements of the objects and/or actors (61) can be made visible using a timeline slider; and/or
- the three-dimensional point-cloud data of the set comprising the point-cloud data of the objects and/or actors (61) is provided to the VFX engine (3) so that it can be used by the VFX engine (3) to determine a three-dimensional position for a visual effect (62) to be applied to the scene relative to three-dimensional positions of the objects and/or actors (61), particularly wherein the three-dimensional point-cloud data of the set comprising the point-cloud data of the objects and/or actors (61) is provided to the VFX engine (3) in real-time.

6. Pose tracking system according to any one of the preceding claims, wherein
- the pose tracking device (1) comprises at least three 2D cameras (21, 21') that are arranged on the device to provide two-dimensional image data of different parts of the set; and/or
- at least one 2D cameras (21, 21') is configured as a high-definition camera and arranged to provide two-dimensional image data of the scene; and/or
- at least one 2D camera (21') is configured as a wide angle or fisheye camera arrangement, particularly wherein at least two or three 2D cameras (21') are configured as wide angle or fisheye camera arrangements, the wide angle or fisheye camera arrangement comprising a high-resolution 2D camera and a wide angle or fisheye lens, particularly wherein the high-resolution 2D camera and a wide angle or fisheye lens are arranged and configured to capture image data covering a visual field of 360° around a first axis and at least 160°, particularly at least 190°, around a second axis that is orthogonal to the first axis.

7. Pose tracking system according to any one of the preceding claims, wherein the laser emitters (24) are configured to emit infrared light and at least a subset of the laser emitters (24) is configured
- to emit light pulses in the form of a pattern to generate a pattern of reflections of the light pulses, wherein the at least one time-of-flight camera (23) is configured for capturing three-dimensional point-cloud data using the pattern of reflections, particularly wherein the subset of the laser emitters (24) comprises an optical lens, grating or mesh to produce the pattern, and/or the localization unit is configured to use the three-dimensional point-cloud data of the pattern of reflections to perform a ToF SLAM functionality for simultaneous localization and mapping; or
- to emit diffused infrared lighting, wherein the sensor array of each of the time-of-flight cameras (23) is configured to receive reflections of the diffused infrared lighting emitted by the one or more laser emitters (24), the time-of-flight cameras (23) are configured to generate intensity images based on the received reflections of the diffused infrared lighting, and the localization unit is configured to execute a Visual-SLAM and/or ToF-SLAM functionality using the intensity images received from the time-of-flight cameras (23) for simultaneous localization and mapping, particularly also using two-dimensional image data of the imaging unit and/or localization data of the localization unit.

8. Pose tracking system according to any one of the preceding claims, the system comprising the VFX engine (3), wherein the VFX engine is configured
- to apply visual effects (62), augmented reality and/or an artificial background to the scene, particularly wherein the set comprises at least one chroma keying screen (60) or a video screen (65) and/or is a virtual studio, and
- to generate (170) and/or adapt (175), using at least the pose data (31), VFX data that is related to the visual effects (62), the augmented reality and/or the artificial background,
particularly wherein the pose tracking device (1) is configured to provide at least the pose data to the VFX engine (3) in real-time and the VFX engine is configured
- to adapt (175), in real-time and based on the pose data (31), an artificial background displayed on a video screen (65) at the set to the pose of the digital video camera (5); and/or
- to generate, using the generated (170) VFX data and video stream data (35) generated by the digital video camera (5), live feedback data (36), and to provide (180), in real-time, the live feedback data (36) to a display unit at the set, particularly to a display unit (10) of the pose tracking device (1), for visualizing (190) the live feedback data (36) as a live feedback video, particularly wherein the VFX data is related to visual effects (62), the pose tracking device (1) is configured to provide also the three-dimensional point-cloud data to the VFX engine (3) in real-time, and the VFX engine is configured to use the three-dimensional point-cloud data for generating (170) the VFX data, particularly for defining three-dimensional positions of the visual effects (62) in the live feedback video.

9. Method (100) for tracking a pose of a video camera (5) in an environment, wherein the environment comprises a set of a film or TV production and the video camera (5) is used for filming a scene at the set, the method comprising
- continuously capturing (110), using one or more time-of-flight cameras (23) positioned at the video camera (5), three-dimensional point-cloud data of the scene; and
- performing a pose determination functionality, to generate (130) pose data (31) for the video camera (5),
wherein the pose determination functionality is performed by a pose tracking device (1) at the video camera (5), particularly the pose tracking device of the pose tracking system according to any one of the preceding claims, wherein the pose determination functionality comprises
- continuously capturing (120) two-dimensional image data of the environment with one or more 2D cameras (21), and
- continuously generating (130), based on the two-dimensional image data and/or the three-dimensional point-cloud data, pose data (31) related to a pose of the video camera (5),
the method further comprising generating (170) and/or adapting (175), using at least the pose data (31), VFX data that is related to visual effects (62), augmented reality and/or an artificial background for the scene.

10. Method (100) according to claim 9, wherein
- the scene involves objects and/or actors (61) being present on the set, and the three-dimensional point-cloud data of the set captured by the at least one time-of-flight camera (23) comprises point-cloud data of the objects and/or actors (61), particularly wherein the set comprises a chroma keying screen (60) behind the objects and/or actors (61); and
- also the three-dimensional point-cloud data of the scene is used for generating (170) and/or adapting (175) the VFX data,
particularly wherein
- the three-dimensional point-cloud data of the set comprising the point-cloud data of the objects and/or actors (61) is used to determine a three-dimensional position for a visual effect (62) to be applied to the scene relative to three-dimensional positions of the objects and/or actors (61), particularly wherein three-dimensional positions of the objects and/or actors (61) are determined in real-time; and/or
- the objects and/or actors (61) are moving during a take of the scene, and the method comprises detecting the moving objects and/or actors (61) in the three-dimensional point-cloud data, and tracking positions of the moving objects and/or actors (61) during the take, particularly wherein the three-dimensional point-cloud data of the scene is visualized together with the tracked positions, wherein a user is enabled to visualize movements of the objects and/or actors (61) using a timeline slider.

11. Method (100) according to claim 9 or claim 10, wherein the digital camera (5) is moved through the environment along a trajectory while capturing the video stream of the scene, and the pose data (31) also relates to the trajectory of the video camera (5),
particularly wherein the set comprises a chroma keying screen (60) or a video screen (65) for applying an artificial background to the scene, particularly wherein
- the scene comprises objects in front of the chroma keying screen (60) or video screen (65), particularly wherein the objects and/or actors are moving while the video camera (5) is moved along the trajectory, and/or
- the artificial background comprises three-dimensional virtual objects, particularly a landscape, moving virtual objects or visual effects (62).

12. Method (100) according to any one of claims 9 to 11, wherein
- the pose determination functionality comprises continuously capturing inertial data using an inertial measuring unit (15) and/or position data, wherein generating (130) the pose data (31) is also based on the inertial data and/or position data, particularly wherein the pose tracking device (1) comprises the inertial measuring unit (15) and/or a GNSS receiver (16) used for capturing the position data; and/or
- the pose tracking device (1) comprises the one or more 2D cameras (21) and the one or more time-of-flight cameras (23), and generating (130) the pose data (31) is also based on the three-dimensional point-cloud data.

13. Method (100) according to any one of claims 9 to 12, wherein generating (170) and/or adapting (175) the VFX data is performed by a VFX engine (3), wherein video stream data (35) from the digital video camera (5) is received by the VFX engine (3), particularly wherein
- generating (170) and/or adapting (175) the VFX data is also based on the video stream data (35);
- the video stream data (35) and the pose data (31) are continuously received by the VFX engine;
- the video stream data (35) comprises the pose data (31) as meta data; and/or
- the method comprises capturing (150), using the digital video camera (5), a video stream of the scene, wherein the video stream data (35) is generated based on the video stream.

14. Method (100) according to any one of claims 9 to 13, wherein the set comprises at least one chroma keying screen (60) that is used for applying an artificial background to the scene, the method comprising
- generating (170), using at least the pose data (31), VFX data that is related to the artificial background for the scene,
- generating, using the VFX data and video stream data (35) generated by the digital video camera (5), live feedback data (36),
- providing (180), the live feedback data (36) to a display unit, particularly to a display unit (10) of the pose tracking device (1), and
- visualizing (190), in real time, the live feedback data (36) as a live feedback video, particularly to an operator of the video camera (5), wherein the artificial background is visualized on the chroma keying screen (60) in the live feedback video.

15. Method (100) according to any one of claims 9 to 14, comprising
- adapting (175), in real-time and based on the pose data (31), an artificial background displayed on a video screen (65) at the set to a current pose of the video camera (5); and/or
- generating, using the generated (170) VFX data and video stream data (35) generated by the video camera (5), live feedback data (36), providing (180), in real-time, the live feedback data (36) to a display unit at the set, particularly to a display unit (10) of the pose tracking device (1), and visualizing (190) the live feedback data (36) as a live feedback video, particularly wherein the VFX data is related to visual effects (62), and the three-dimensional point-cloud data is used for generating (170) the VFX data, particularly for defining three-dimensional positions of the visual effects (62) in the live feedback video,
particularly wherein the method further comprises applying visual effects (62), augmented reality and/or an artificial background to the scene based on the VFX data, particularly wherein the set comprises at least one chroma keying screen (60) or a video screen (65) and/or is a virtual studio.
